# FASCICULE DE BREVET EUROPEEN

(11) **EP 1 309 288 B1**
(45) Date de publication et mention de la délivrance du brevet: **16.05.2007**
(21) Numéro de dépôt: 01962503.7
(22) Date de dépôt: 11.06.2001
(51) Int. Cl.: A61C 5/00

(54) **APPLICATEUR POUR L'APPLICATION D'UN AGENT DE SCELLEMENT SUR SURFACES DENTAIRES LISSES, PARTICULIEREMENT SUR LES SURFACES INTERPROXIMALES**
GERÄT ZUM ANBRINGEN VON FÜLLUNGSMATERIALIEN AUF GLATTE ZAHNOBERFLÄCHEN, INSBESONDERE AUF INTERPROXIMALE OBERFLÄCHEN
APPLICATOR FOR APPLYING A SEALING AGENT ON SMOOTH DENTAL SURFACES, IN PARTICULAR ON INTERPROXIMAL SURFACES

(30) Priorité: 09.06.2000 CA 2311278
(43) Date de publication de la demande: 14.05.2003
(73) Titulaire: Neks Technologies Inc., Laval, Québec H7V 4A9 (CA)
(72) Inventeur: Karazivan, Naim, Neks Recherche et Dév. Inc., Laval, Quebec H7V 4A9 (CA)
(74) Mandataire: Maureau, Philippe
(86) Numéro de dépôt international: PCT/CA2001/000824
(87) Numéro de publication internationale: WO 2001/093774

(56) Documents cités:
- EP-A- 0 085 027
- EP-A- 0 087 022
- EP-A- 0 491 654

## Description

### DOMAINE TECHNIQUE

L'invention concerne un dispositif d'application d'agents de scellement aux surfaces dentaires lisses et, plus particulièrement, aux surfaces dentaires interproximales.

### TECHNIQUE ANTÉRIEURE

On sait que les agents de scellement appliqués sur les dents préviennent et arrêtent le processus de la carie. Par exemple, à l'aide d'un pinceau ou d'un compte-gouttes, on peut appliquer une couche d'un agent de scellement sur les surfaces occlusales qui sont faciles d'accès, et de façon similaire, si désiré, sur les surfaces dentaires buccales et linguales. Les agents de scellement peuvent ainsi prendre la forme de film plastique.

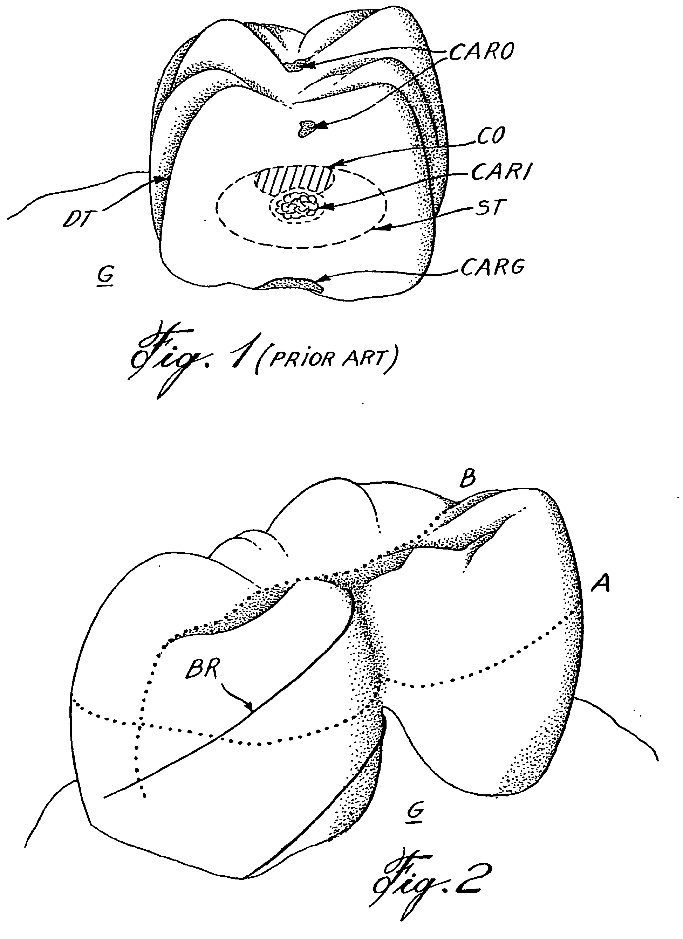

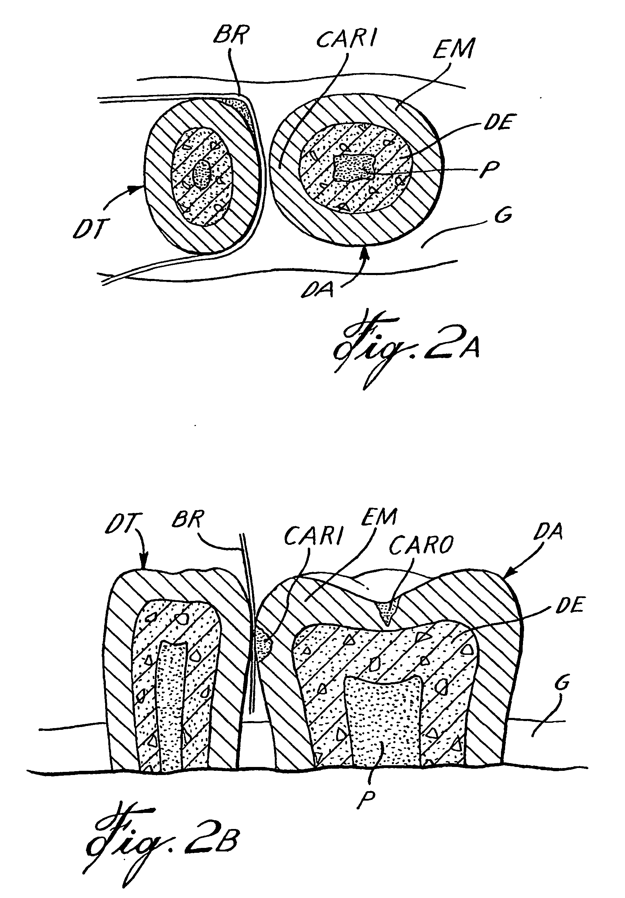

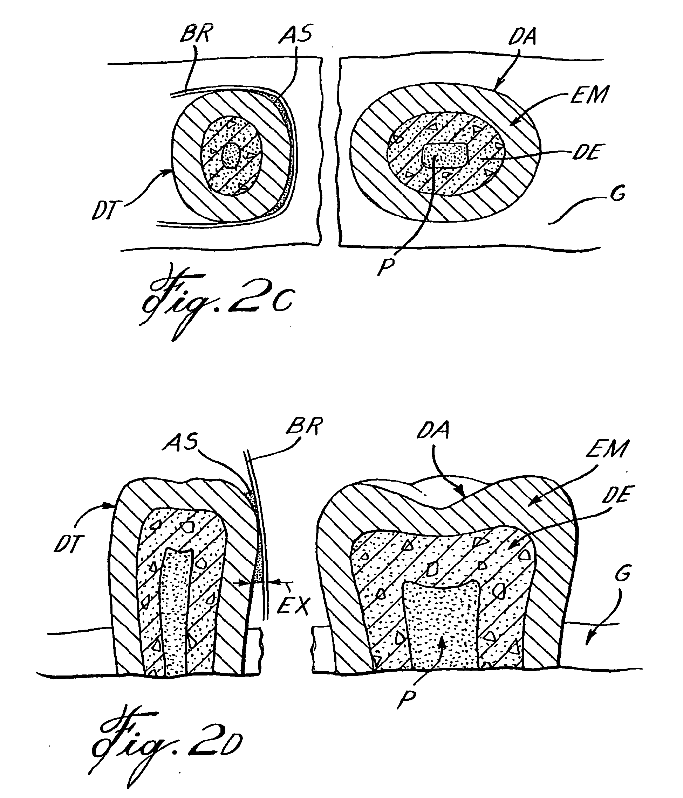

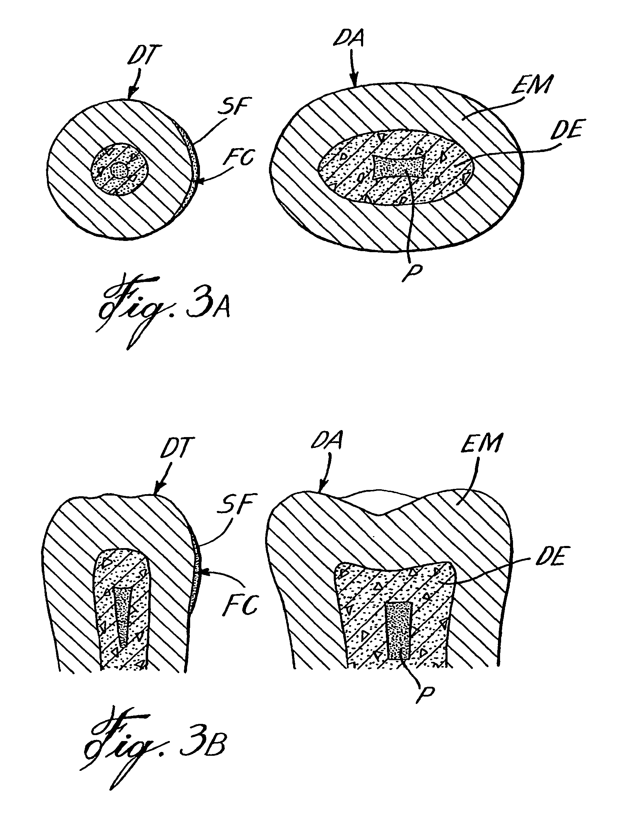

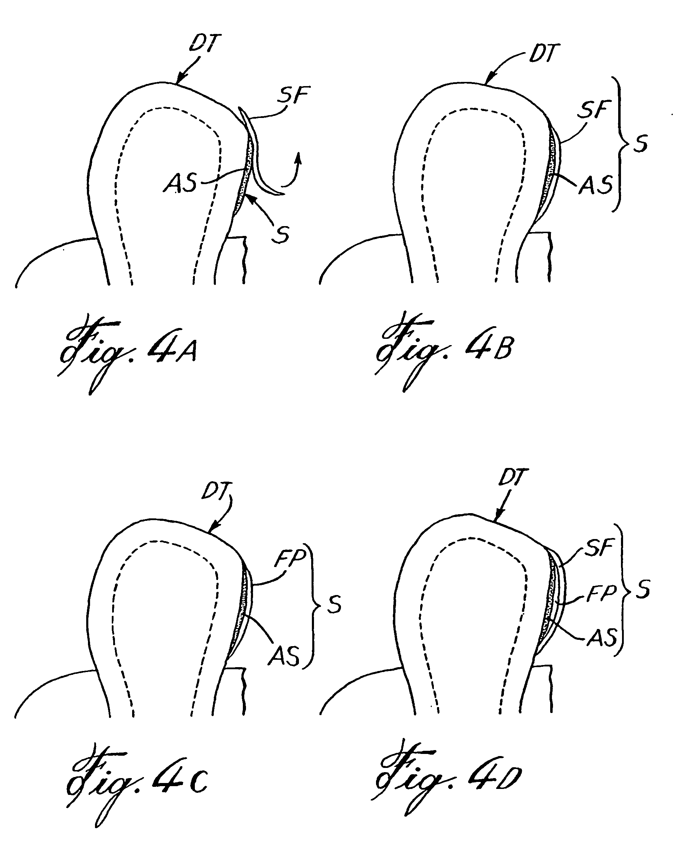

Les méthodes de scellement pour l'occlusal, ayant pour objectif d'arrêter ou de prévenir la carie occlusale CARO (voir figure 1), ne sont pas efficaces pour des applications où l'accès est difficile, tel que sur les surfaces interproximales.

Également, les soies dentaires sont parfois utilisées pour appliquer certains produits protecteurs non rigides (e.g. cires, film malléable hydrophile ou hydrophobe etc.).

Il y a donc un besoin pour un produit et une méthode qui permettraient l'application d'un revêtement protecteur durable d'une forme biocompatible sur les surfaces dites lisses et plus particulièrement sur les surfaces interproximales. Une grande proportion des caries dentaires se situe sur les surfaces interproximales près du point de contact entre deux dents adjacentes, une protection de cette région est donc souhaitable pour prévenir ou arrêter le processus de la carie interproximale CARI.

Dans l'article *"Plastic sealing of proximal surfaces of teeth, a new technique"* (Journal of Baltimore College of Dental Surgeons, de Davila JM, Sisca RF, Tinanoff N, Provenza DV, 1975 Jul 30(1), pages 40-47), il est question d'un applicateur de scellant destiné pour le scellement de surfaces interproximales. Cet applicateur comprend une bande plate de polyuréthane qui inclut en son centre une pièce de tissu absorbant de 250 microns d'épaisseur et, sur les côtés de cette pièce de tissu, deux portions latérales de 60 microns d'épaisseur. La technique décrite est la suivante : un agent de mordançage est d'abord appliqué sur la dent en utilisant le tissu absorbant, puis un autre applicateur est utilisé pour appliquer le scellant auto-polymérisable via son propre tissu absorbant. Ce scellant encore non-polymérisé est par la suite recouvert, durant la polymérisation, par une des portions latérales en polyuréthane de l'applicateur.

### EXPOSÉ DE L'INVENTION

La présente invention a pour objet de proposer un applicateur permettant de faire l'application, sur la surface dentaire lisse d'une dent, d'un scellant de morphologie biocompatible, ainsi qu'une méthode d'application de ce scellant. La surface dentaire traitée sur laquelle est appliqué le scellant peut comporter de la décalcification (carie) ou être saine. Particulièrement, la surface dentaire lisse est une surface interproximale.

Suivant la présente invention, un dispositif pour appliquer, sur une surface dentaire lisse, un scellant de morphologie biocompatible est proposé. Ce dispositif comprend principalement une surface fermée ainsi que des moyens pour positionner ladite surface fermée contre une surface dentaire à traiter, des moyens pour maintenir ladite surface fermée en position contre la surface dentaire, et un agent de scellement conçu pour adhérer à la surface dentaire.

Suivant la présente invention, on propose un dispositif pour appliquer un scellant sur une surface interproximale d'une dent, comprenant une surface fermée, des moyens de positionnement pour positionner ladite surface fermée contre une surface interproximale à traiter d'une dent, un agent de scellement conçu pour être positionné généralement entre ladite surface fermée et la surface interproximale et pour adhérer à la surface interproximale, et des moyens de maintien pour maintenir ladite surface fermée en position contre la surface interproximale durant le durcissement de l'agent de scellement, l'agent de scellement lorsque durci constituant au moins une partie du scellant appliqué à la surface interproximale.

Également, suivant la présente invention, on propose un dispositif pour appliquer un scellant sur une surface interproximale d'une dent, comprenant une surface fermée, des moyens de positionnement pour positionner ladite surface fermée contre une surface interproximale à traiter d'une dent, ladite surface fermée étant conçue pour permettre à un agent de scellement d'être reçu généralement entre ladite surface fermée et la surface interproximale, et des moyens de maintien pour maintenir ladite surface fermée en position contre la surface interproximale durant le durcissement de l'agent de scellement, l'agent de scellement lorsque durci adhérant à la surface interproximale et constituant au moins une partie du scellant appliqué à la surface interproximale.

### DESCRIPTION SOMMAIRE DES DESSINS

Ayant ainsi généralement décrit la nature de l'invention, une réalisation préférée de la présente invention sera maintenant décrite en référence aux dessins annexés.
La figure 1 est une vue interproximale d'une dent et positionnement d'éléments anatomiques.
La figure 2 est une vue en perspective de dents en contact avec une bande régulière de reconstruction qui passe entre ces dents, des lignes de coupe étant également illustrées comme référence.
La figure 2A est une coupe selon le plan horizontal de coupe A de la figure 2.
La figure 2B est une coupe selon le plan vertical de coupe B de la figure 2.
La figure 2C est une coupe similaire à la figure 2A, mais montrant les dents de façon séparée et mettant en évidence le contour non-anatomique du scellant.
La figure 2D est une coupe similaire à la figure 2B, mais montrant les dents de façon séparée et mettant en évidence le contour non-anatomique du scellant appliqué.
La figure 3A est une coupe selon le plan de coupe A de la figure 2, montrant les dents de façon séparée, et est similaire à la figure 2C sauf qu'elle illustre un dispositif d'application de scellant suivant la présente invention plutôt que la bande régulière.
La figure 3B est une coupe selon le plan de coupe B de la figure 2, montrant les dents de façon séparée, et est similaire à la figure 2D sauf qu'elle illustre un dispositif d'application de scellant suivant la présente invention plutôt que la bande régulière.
Les figures 4A, 4B, 4C et 4D sont des coupes schématiques similaires à la figure 3B et montrant, suivant la présente invention, des exemples d'application de scellant sur une dent.
La figure 5 est une perspective globale de la réalisation préférée du dispositif d'application de scellant de la présente invention.
La figure 6 est une perspective globale d'une variante du dispositif d'application de scellant de la présente invention.
La figure 6A est une vue interproximale de la variante de la figure 6, positionnée sur une dent.
La figure 6B est une vue buccale de la variante de la figure 6, positionnée sur une dent (une prémolaire qui est la même qu'à la figure 6A).
La figure 7A est une coupe selon le plan de coupe A de la figure 2, montrant deux dents de façon séparée et le dispositif d'application de scellant de la présente invention, les deux dents étant à traiter.
La figure 7B est une coupe selon le plan de coupe B de la figure 2, montrant deux dents de façon séparée et le dispositif d'application de scellant de la présente invention, les deux dents étant à traiter.
La figure 8 est une perspective globale de deux dents en contact avec instrument de détartrage.
La figure 9 est une perspective globale des deux dents de la figure 8 mais durant l'utilisation de dispositif d'application de scellant de la présente invention.
La figure 10 est une perspective globale d'une variante du dispositif d'application de scellant de la présente invention.
La figure 11 est une perspective globale d'une autre variante du dispositif d'application de scellant de la présente invention.
La figure 12 est une perspective globale d'une autre variante du dispositif d'application de scellant de la présente invention.
La figure 13 est une perspective globale d'une autre variante du dispositif d'application de scellant de la présente invention.
La figure 14 est une perspective globale d'une autre variante du dispositif d'application de scellant de la présente invention.
La figure 15 est une perspective globale d'une autre variante du dispositif d'application de scellant de la présente invention.

### MANIÈRE DE RÉALISER L'INVENTION

### Définitions :

*Dent traitée DT* : dent sur laquelle est appliqué un scellant S.
*Dent adjacente DA* : dent adjacente à la dent traitée DT.
*Surface de contact CO : point ou surface de contact entre deux dents adjacentes.*
*Bande régulière BR* : bande utilisée comme matrice de support lors d'une la reconstruction dentaire.
*Émail dentaire EM* : émail naturel retrouvé sur la dent.
*Dentine DE.*
*Chambre pulpaire P.*
*Gencive G.*
*Surface traitée ST* : Région de la surface lisse plus vulnérable à la carie et qu'on désire protéger à l'aide d'un scellant S appliqué par la présente invention.
*Carie occlusale CARO* : carie qui se retrouve en tout ou en partie sur la surface occlusale de la dent.
*Carie interproximale CARI* : carie qui se retrouve en tout ou en partie sur la surface interproximale de la dent.
*Carie de racine CARG* : carie qui se retrouve en tout ou en partie sur la surface de la racine de la dent.
*Surface dentaire lisse :* peut être une surface mésiale, distale, buccale ou linguale de la dent ; cette surface peut avoir été restaurée ou peut, en tout ou partie, être une surfacé radiculaire.
*Contaminants :* les fluides créviculaires, la salive, le sang, la plaque dentaire, le tartre, l'oxygène ou tout autre produit présent dans la région traitée qui nuit à l'application adéquate du scellant sur une surface lisse ; ces contaminants peuvent nuire à la polymérisation et/ou à l'adhésion et/ou à l'application de l'agent de scellement.
*Agent de scellement AS :* inclut, sans restreindre, tout adhésif dentaire, ciment dentaire, scellant dentaire, résine type BIS-GMA, autres matériaux habituellement de restauration, autres matériaux de cimentation ou autres types de matériaux pouvant constituer un revêtement. Ces matériaux peuvent être chargés (e.g. micro-particules), ou non chargés. Ces matériaux peuvent contenir ou non une ou plusieurs substances bénéfiques (e.g. fluor). Ces matériaux peuvent ou non être polymérisés à la lumière, à l'ultraviolet ou être auto-polymérisable. L'agent de scellement AS doit pouvoir adhérer à la surface dentaire sur une période prolongée (plusieurs mois).
*Film protecteur FP :* Ce film est constitué d'un produit cohésif faisant partie du scellant S et ayant pour but d'améliorer l'efficacité du scellant S. Ce film est inséré dans le volume de la surface-cavités avant ou pendant la procédure d'application du scellant S. Ce film peut-être d'une seule pièce ou constitué de plusieurs fragments de produit. Ce film peut être constitué d'un agent de scellement polymérisé, d'un film de métal (e.g. or, alliage de métal, titanium) ou de toute autre substance protectrice biocompatible ayant un effet protecteur.
*Agent de conditionnement AC :* l'agent de conditionnement AC inclut, entre autres, une solution acide, comme l'acide phosphorique, citrique ou maléique, apprêts («primer») auto-mordançant, apprêts de conditionnement (« conditionner ») qui peuvent être appliqués sur l'émail, la dentine ou le cément de la dent pour une certaine période de temps pour préparer la surface préalablement à l'utilisation de l'agent de scellement AS. Cet agent peut, ou non, être enlevé par rinçage (e.g. avec de l'eau) ou être neutralisé avec une substance compatible avec l'agent de scellement AS (e.g. base neutralisante ou autre neutralisant) préalablement à l'application de cet agent de scellement. L'agent de conditionnement AC peut également être un solide ou un liquide qui facilite l'insertion de l'agent de scellement AS en étant inséré préalablement ou simultanément à l'agent de scellement (e.g. poudre absorbante, substance spongieuse absorbante, alcool, acétone, etc.)
*Scellant S :* Produit cohésif laissé en place sur la surface dentaire après la procédure d'application et résultant de cette application. Il peut comprendre un ou plusieurs des éléments suivants ou composants de ces éléments : agent de scellement AS, agent protecteur, agent de conditionnement AC, film protecteur, surface fermée SF (voir description ci-dessous), ou autres.
*Nota Bene :* Les caractéristiques favorables d'un agent de scellement AS pourraient être : temps de polymérisation rapide, forte adhésion à l'émail et dureté en couche mince. Il est préférable que cet agent de scellement AS contienne du fluor et autres agents favorables pour la dent et/ou le parodonte. Polymérisation complète en couche mince et peu sensible à la contamination (e.g oxygène, humidité, etc.). Également, l'agent de scellement AS peut être d'une couleur facilement repérable par le clinicien.

### SURFACE FERMÉE SF

Dans cette section, la partie principale de l'invention sera décrite, et différentes variantes de celle-ci seront également explicitées.

La surface fermée SF est constituée d'un ou plusieurs matériaux qui constituent une forme tridimensionnelle, telle un moule, capable d'épouser (sans nécessairement toucher) la surface de la dent ST que l'on désire traiter tout en laissant une ou plusieurs cavité(s) se créer entre la surface dentaire ST et cette surface fermée SF.

Les surfaces de la surface fermée SF qui font face aux surfaces de la dent traitée sont qualifiées d'internes.

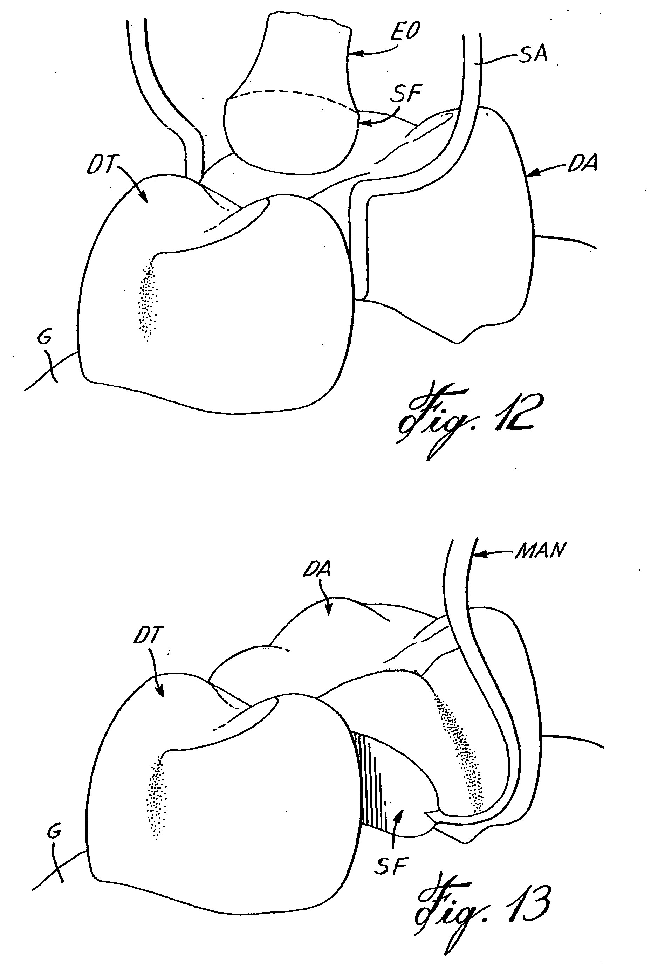

Le volume de la cavité ou de l'ensemble des cavités au moment de la polymérisation de l'agent de scellement AS sera appelé : feuille-cavités FC. Cette feuille-cavités FC sert de moule (délimité par la surface traitée ST et la surface fermée SF) de forme biocompatible pour l'agent de scellement AS. La feuille-cavités FC a une épaisseur moyenne très faible, idéalement en moyenne autour de 15 microns, mais pouvant varier en moyenne entre 1 et 150 microns. Aux figures 3A et 3B, on retrouve une coupe schématique de la surface fermée SF et de la feuille-cavités FC sur la dent traitée DT.

La surface fermée SF a une forme telle que, lorsqu'elle est mise en position adéquatement contre la surface de la dent à traiter ST, les portions périphériques de sa surface interne sont en moyenne plus rapprochées ou aussi rapprochées de la surface dentaire que les autres portions de sa surface interne.

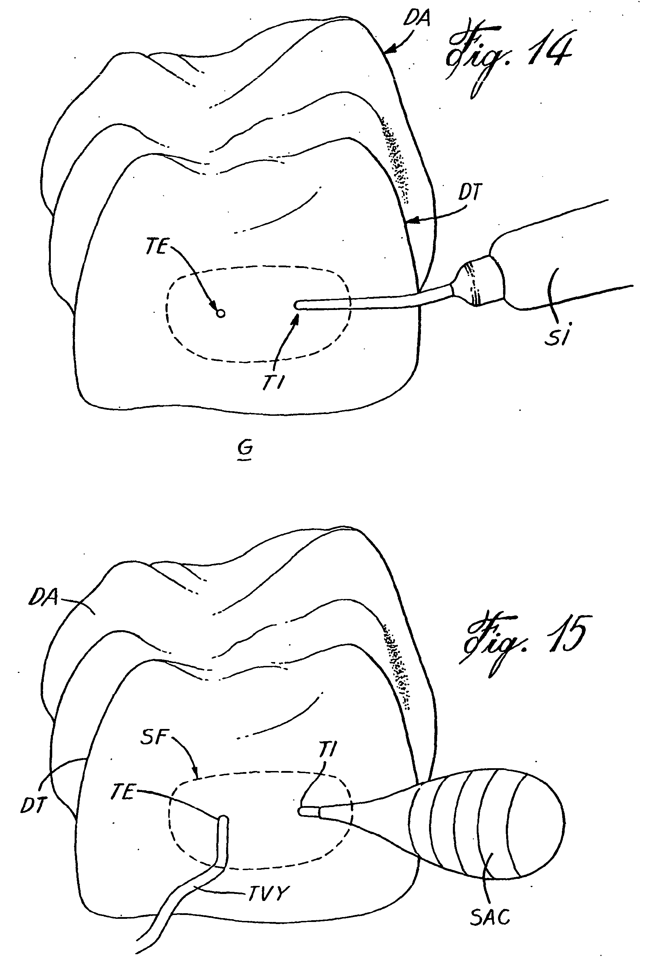

Le scellant S (figures 4A à 4D) qui résulte du moulage dans une feuille-cavités FC aura une forme qui sera en harmonie avec la forme biologique de la surface dentaire qu'il revête et protège. Ce scellant S sera donc une mince couche de quelques microns d'épaisseur qui sera acceptable cliniquement selon les critères d'évaluation cliniques actuels et ne représentera pas par conséquent un changement important de la forme originale de la dent, ni ne comportera d'aspérités (« gap ») importantes.

La morphologie des surfaces dentaires lisses variant fortement inter et intra patients, une surface fermée SF conçue spécialement pour s'adapter à la surface dentaire ST que l'on désire traiter est grandement souhaitable. Ceci est possible en utilisant un matériau malléable (e.g. film de Mylar® de Dupont d'à peu près 25 microns d'épaisseur) ou élastique. Il est possible, pour la réalisation de cette surface fermée SF, que l'agent de scellement AS ou le film protecteur ou les autres adjuvants soient présents entre la dent et la surface interne de la surface fermée SF.

La surface fermée SF est donc une structure 3D qui a un contour défini et qui épouse la surface dentaire. La périphérie de cette structure s'adapte très intimement à la surface dentaire en laissant une cavité, dénotée feuille-cavités FC, qui sert de moule pour l'agent de scellement AS.

Il existe plusieurs variantes de cette surface fermée SF, et les caractéristiques de ces variantes sont décrites ci-dessous.

### Surface adaptée

Il est possible de fournir une surface fermée SF qui s'adapte adéquatement à l'ensemble ou à un sous-ensemble des surfaces lisses. Dans ce cas, il est possible de procéder en faisant la moyenne des surfaces que l'on veut inclure dans l'ensemble ainsi qu'en faisant la moyenne proportionnelle tridimensionnelle de ces surfaces, puis on choisit la surface mitoyenne et on y conçoit la surface fermée SF. Alternativement, il est possible de procéder par "essais et erreurs" pour mettre au point une surface fermée SF qui convient au plus grand nombre de surfaces lisses dans l'ensemble choisi.

### Surface adaptable

Il est également possible de faire une surface fermée SF de base dans un matériau adaptable que l'opérateur peut ajuster à la surface dentaire traitée DT, e.g. Mylar®, acier inoxydable, or, etc.

### Surface fermée SF non-adhérente ou adhérente

La surface fermée SF peut être faite d'un matériau qui n'adhère pas à l'agent de scellement AS si l'on désire que le scellant S puisse se détacher de la surface fermée SF (figure 4A). Cependant, il peut être intéressant - par exemple pour obtenir un meilleur fini de surface, pour obtenir un revêtement plus résistant ou pour d'autres raisons - de réaliser une surface fermée SF qui adhérera en tout ou en partie à l'agent de scellement AS et qui fera donc partie intégrante du scellant S (figure 4B).

### Surface fermée SF texturée

Il est également possible qu'il soit avantageux d'avoir la surface interne de la surface fermée SF micro ou macro texturée, formant ainsi une feuille-cavités FC formée de plusieurs cavités ou formant un fini de surface texturée non-lisse. Ceci peut être fait dans le but d'augmenter la facilité d'adaptation sur les différents types de surfaces lisses ou pour favoriser la polymérisation de certains agents de scellement en abaissant la tension de surface.

### Surface fermée SF avec un film pré-apposé

Il est également possible de pré-apposer un film-protecteur FP sur la surface de la surface fermée SF occupant en tout ou en partie le volume de la feuille-cavités FC. Le film-protecteur FP est un film protecteur flexible qui augmente la protection de la surface en recouvrant l'agent de scellement et/ou la surface de la dent dans les régions où il y a eu manque ou absence de durcissement de l'agent de scellement AS durant ou après la procédure d'application. Le film-protecteur FP peut être appliqué avant ou pendant le traitement, lors de la production de la surface fermée SF ou par l'opérateur. La figure 4C montre un scellant S comprenant le film-protecteur FP et l'agent de scellement AS, tandis que la figure 4D illustre un scellant S qui inclut la surface fermée SF (en plus du film-protecteur FP et de l'agent de scellement AS de la figure 4C).

### Surface fermée SF avec pré-apposition d'une composante d'un agent de scellement

Il est également possible de pré-apposer une composante de l'agent de scellement AS sur la surface fermée SF avant ou pendant le traitement, lors de la production ou par l'opérateur. Ceci a pour but de contrôler la zone de polymérisation.

### Surface fermée SF avec pré-apposition d'un agent de conditionnement AC

Il est également possible de pré-apposer un agent de conditionnement AC qui peut être appliqué avant ou pendant le traitement, lors de la production ou par l'opérateur.

### Surface fermée SF avec vides V

La surface fermée SF peut également comporter des vides V (e.g. trous ou fentes) pouvant servir, entre autres, à briser les tensions dans la surface fermée SF qui nuisent à l'adaptation intime de cette surface fermée SF sur la surface dentaire.

Les quelques variantes de la surface fermée SF décrites ci-dessus, peuvent être réalisées dans divers matériaux ou combinaison de matériaux, par exemple plastique ou celluloïd (Mylar®, polyester, Nylon...), métaux (Stainless steel, alliages d'or, NI-TI, titane ou autres), matériaux auto ou photo polymérisant (matériaux à empreinte en polysiloxane, e.g. reprosil®, alginate, résine ou autres), films étirables (de type SaranWrap®, de type caoutchouc, uréthane, PTFE ou autres), matériaux pré-polymérisés (d'un agent de scellement polymérisé ou d'un film protecteur).

Pour que la surface fermée SF décrite précédemment puisse être utilisée facilement et efficacement, diverses composantes peuvent être rajoutées. Les paragraphes suivants décrivent les composantes pouvant être ajoutées seules ou en combinaison avec d'autres à la surface fermée SF.

### Ailes latérales AL

Afin de permettre la manipulation et le positionnement de la surface fermée SF, des ailes latérales AL peuvent être ajoutées à la surface fermée SF (voir figures 5, 6, 7A, 10 et 11). Les ailes AL peuvent avoir plusieurs formes différentes, allant d'un simple fil (e.g. soie dentaire) à une bande. Les ailes AL peuvent être constituées d'un matériau ou de plusieurs matériaux semblable(s) à celui/ceux pouvant composer la surface fermée SF.

Les ailes AL peuvent êtres serrées autour de la dent DT à l'aide d'un appareil du type « serre-matrice » (e.g. porte matrice tofflemire® PMT1, voir figures 6, 9 et 10).

L'une des ailes AL peut être passée à travers la surface de contact CO (figures 1, 6A et 6B) entre les dents, de façon à, par la suite, entraîner par glissement la surface fermée SF sur la région de la surface dentaire ST que l'on veut sceller.

Les ailes AL peuvent servir, lorsque nécessaire, pour l'application d'une force sur la surface fermée SF afin de permettre de garder celle-ci en contact intime avec la surface dentaire ST.

### Système de fixation

Il est souvent nécessaire de maintenir immobile la surface fermée SF une fois qu'elle a été positionnée adéquatement pour toute la durée de la polymérisation de l'agent de scellement AS. On peut en conséquence utiliser un ou plusieurs systèmes de maintien qui est (sont) collé(s) de façon temporaire ou permanente ou juxtaposé(s) à la surface fermée SF avant ou pendant le traitement. Voici certains de ces systèmes de fixation.

### Fixation avec bande ou fil F

Sur le bord gingival de la surface fermée SF, un élément allongé F (bande ou fil) est attaché de façon temporaire ou permanente ou juxtaposé avec ce bord. Cet élément allongé F (figures 5 et 10) a pour but d'entourer fermement la dent traitée DT au niveau gingival pour maintenir la surface fermée SF et peut accomplir un scellement qui isole la surface fermée SF des fluides provenant de la partie gingivale. L'élément allongé F peut être serré autour de la dent DT à l'aide d'un porte matrice, e.g. serre-matrice tofflemire® PMT2 (voir figures 5 et 10), etc. L'élément allongé F peut être constitué ou comprendre une substance favorisant l'étanchéité (e.g. substance caoutchouteuse).

### Fixation avec coin de bois CB

Un élément ayant la forme d'un coin de bois CB dentaire ordinaire (figure 11) peut être simplement collé de façon temporaire ou permanente ou juxtaposé à la surface fermée SF pour maintenir la surface fermée SF en position.

Ce système permet également d'obtenir une certaine isolation la surface fermée SF du milieu gingival. Le coin de bois CB est placé dans l'espace proximal de la façon habituelle en le coinçant.

### Fixation avec bande sur dent adjacente

Au lieu de passer l'élément allongé F décrit ci-dessus autour de la dent traitée DT, il peut être destiné à être passé autour d'une des dents adjacentes DA à la dent traitée DT.

### Fixation avec extension dans le point de contact

La surface fermée SF peut être maintenue grâce à une extension partant du bord occlusal de la surface fermée SF qui est destinée à être coincée dans le point ou la surface de contact CO. La pression des dents sur cette structure permet de maintenir l'ensemble de la surface fermée SF en position.

Cette extension peut être constituée d'un mince film fait d'un ou plusieurs matériaux (e.g. les mêmes matériaux qui peuvent constituer la surface fermée SF). L'épaisseur de cette extension peut varier entre 0.0005 à 0.010 pouce.

Cette extension pourra également servir pour l'écartement des dents dans certaines situations.

### Fixation avec un manche

Un manche MAN (figure 13) peut être collé de façon temporaire ou permanente ou simplement juxtaposé sur la surface fermée SF afin de positionner et maintenir cette surface fermée SF contre la surface traitée ST. Le manche MAN peut être constitué d'un ou plusieurs types de matériaux différents. Comme manche MAN, un instrument ressemblant à une curette ou à un explorateur peut être utilisé, l'embout étant suffisamment mince pour pouvoir s'insérer dans l'espace interproximal ou à proximité. Le manche MAN peut également comporter un tuyau interne pour l'acheminement des différents produits nécessaires pour la procédure d'application (e.g. aiguille d'une seringue, embout d'un système d'abrasion à air etc.).

### Fixation avec un système durcissant

Une substance, pouvant acquérir une mémoire élastique ou pouvant devenir suffisamment rigide (e.g. pâte d'impression, résines photopolymérisables ou autopolymérisables, etc.), est déposée ou forcée autour de la surface fermée SF pour servir à la fois de système de fixation et de surface fermée SF.

### Fixation avec système de bras

Un système de bras pouvant subir une « déformation permanente » (type bras articulé) avec, ou sans, un système actif d'application de force (e.g. ressort) peut être utilisé pour le maintien de la surface fermée SF en position. Ce bras peut être attaché à une structure avoisinante de la surface traitée ST (autre région de la même dent, autres dents, gencive G, etc.)

### Fixation avec extension-occlusale

Une extension-occlusale EO (figures 5, 6A, 6B et 12) peut être ajoutée à la surface fermée afin de permettre le maintien manuel de la surface fermée SF sans utiliser la pression de la surface de contact CO. L'opérateur tient alors cette extension EO à l'aide d'un instrument quelconque (e.g. précelles).

### Fixation à l'aide avec structure gonflable

Un ballon gingival (e.g. un tuyau gonflable) peut être attaché à la surface fermée SF et inséré dans l'espace interproximal. Une fois le ballon gonflé, celui-ci maintient en place par pression la surface fermée SF. Ce ballon peut également servir de système d'isolation.

Les composantes décrites jusqu'à maintenant permettent de manipuler et de maintenir en place la surface fermée SF. Les composantes additionnelles qui suivent ont quant à elles trait à d'autres aspects importants pour réaliser une application adéquate, telle que l'isolation.

### Système d'isolation

Un système d'isolation permet d'empêcher la contamination du volume de la feuille-cavités FC au moins durant les phases critiques de l'application (e.g. polymérisation de l'agent de scellement, etc.). Ce système permet principalement d'empêcher la contamination provenant du gingival. Ce système peut être est collé de façon temporaire ou permanente ou juxtaposé, avant ou durant le traitement, avec la surface fermée SF.

D est possible parfois qu'un autre élément du système de la présente invention accomplisse l'isolation sans qu'il soit nécessaire d'ajouter un système d'isolation dédié.

Un ou plusieurs systèmes d'isolation peuvent être utilisés pour obtenir une isolation adéquate. En voici des exemples.

### Isolation avec élément physique

Une barrière physique peut être utilisée pour réaliser cette isolation, par exemple un joint d'étanchéité E (figure 5) peut être incorporé au système de fixation (e.g. à l'élément allongé F) ou constituer une composante additionnelle en lui-même. Par exemple, une membrane élastique ou spongieuse peut recouvrir la surface externe de la surface fermée SF et dépasser de celle-ci en périphérie créant ainsi un joint d'étanchéité sur toute la périphérie.

### Isolation avec un système actif

Un système actif d'injection d'air, ou de d'autre(s) gaz, peut être raccordé à un orifice ménagé dans la surface fermée SF ou en sa périphérie afin d'injecter sous pression le gaz. Ceci a pour but de repousser activement les agents contaminants.

Également, on peut utiliser un système actif par aspiration (e.g. succion de l'unité dentaire), de configuration et d'installation similaires au système ci-dessus par injection d'air, mais fonctionnant par aspiration plutôt que par injection.

### Agent-inhibiteur

Afin de contrôler l'application de scellant S dans une région non désirée, il peut être utile de placer un agent inhibiteur I (figure 5), forme physique ou substance, qui inhibe la polymérisation de l'agent de scellement AS. Ceci a pour avantage de limiter les excès et adoucir le contour du scellant S appliqué. Par exemple, sur les faces internes du dispositif d'application de l'invention et en périphérie de la surface fermée SF, un inhibiteur (e.g. eau, poudre de talc, uréthane, huile, oxygène, etc.) est placé avant ou pendant le traitement, lors de la production ou par l'opérateur. L'agent-inhibiteur I peut se présenter sous la forme d'une texture ou de perforations incompatibles avec la polymérisation de l'agent de scellement utilisé.

### Système d'injection

Compte tenu que la procédure décrite inclue l'application de produits liquides et gazeux, un système de conduits peut être incorporé dans le système d'application de l'invention afin de faciliter l'application des différents produits nécessaires durant la procédure d'application. Voici certains exemples.

Des orifices TI (figures 5, 14 et 15) ménagés à travers la surface fermée SF ou à travers la région en périphérie de la surface fermée SF peuvent constituer une entrée pour les différents produits utilisés (e.g. eau, acide, air, agent de conditionnement AC, agent de scellement AS, agent abrasif etc.) durant la procédure d'application. On peut alors injecter les différents produits par les orifices TI grâce à une seringue SI (figure 14).

Alternativement, un ou des tuyaux TUY (figure 15) peuvent être raccordés aux orifices TI car les tuyaux TUY vont faciliter l'accès à l'orifice TI, ou aux orifices TI/TE (e.g. acheminer l'accès à l'occlusal). Les étapes peuvent même se faire de l'extérieur de la bouche ; l'opérateur aurait ainsi dans ses mains le ou les tuyaux TUY et n'aurait qu'à injecter les produits utilisés dans le ou les tuyaux TUY correspondants. Des tuyaux TUY pourraient donc relier la surface fermée SF aux mains du clinicien ; celui-ci pourrait ainsi injecter les produits nécessaires pour l'application à partir de l'extérieur de la bouche.

Également, on pourrait utiliser une ou des capsule(s) SAC (figure 15) pré-remplie(s) de produits utilisés durant l'application et reliées aux tuyaux TUY décrits plus haut. En appuyant alors sur ces capsules SAC, les produits désirés seraient introduits dans le volume de la feuille-cavités FC.

### Système d'évacuation

Afin de faciliter le déplacement des produits utilisés (e.g. agent de conditionnement AC, eau, agent de scellement AS, etc.), des trous d'évacuation TE (figures 5, 14 et 15) peuvent être inclus au travers de la surface fermée SF ou de sa périphérie.

### Fibres optiques

Des fibres optiques peuvent être collées de façon permanente ou temporaire ou juxtaposées au dispositif d'application afin d'acheminer les ondes électromagnétiques nécessaires pour la polymérisation de l'agent de scellement AS qui polymérise à la lumière, à l'ultraviolet ou à d'autres ondes voyageant par fibres optiques. Ces fibres optiques peuvent être disposées de façon à contrôler la polymérisation de l'agent de scellement AS pour obtenir une polymérisation sur la surface voulue. La source d'ondes est positionnée pour faire face à l'extrémité opposée de celle qui est près de la surface fermée SF.

### Système d'adaptation sur les dépressions

Certaines dents comportent une ou des dépression(s) ou concavité(s) DEP (figures 7A et 7B) sur leurs surfaces lisses qui peut (peuvent) nuire à l'application adéquate du scellant S (engendrant des zones d'excès ou de manque).

La surface fermée SF peut comprendre une forme C (figures 5, 6A, 7A, 7B et 10) qui épouse la configuration d'une telle concavité. Si tel n'est pas le cas, il peut y avoir, juxtaposée ou collée sur la surface fermée SF et plus particulièrement au gingival et à l'occlusal de cette surface fermée SF, une forme moulante destinée à épouser le ou les dépression(s) présente(s) sur la surface dentaire ST. Cette forme moulante C peut être constituée d'un matériau flexible, spongieux, compressible (e.g. foam, caoutchouc etc., ou du même matériau constituant la surface fermée SF).

### Guide de position

Des guides visuels et/ou physiques M (figure 10) sont incorporés préférablement en périphérie de la surface fermée SF ou ailleurs sur le dispositif d'application, pour aider l'opérateur à positionner la surface fermée SF contre la région de la surface dentaire lisse que l'on désire traiter. Les guides M sont juxtaposés ou collés, de façon temporaire ou permanente, avant ou durant la procédure d'application, sur la surface fermée SF.

Ces guides M peuvent êtres imprimés, embossés ou découpés dans, ou sur, la surface fermée SF ou sur une ou des composante(s) avoisinante(s).

Une structure tridimensionnelle peut être incluse dans l'invention pour servir de guide M visuel et tactile. Cette structure peut s'appuyer sur des structures avoisinantes de la surface traitée ST et ainsi aider l'opérateur à positionner la surface fermée SF adéquatement.

### Élément absorbant

Sur la surface fermée SF, on peut juxtaposer ou coller, de façon temporaire ou permanente, un absorbant qui permet de faciliter le déplacement ou la rétention des produits fluides utilisés. Cet absorbant peut augmenter le contrôle du produit, le temps de contact du produit avec la surface dentaire ou faciliter l'évacuation des fluides.

### Agent d'écartement

L'agent d'écartement AE (figure 5) est une substance ou instrument servant pour l'écartement des dents durant la procédure d'application, lorsque cela est nécessaire.

Cet agent peut être intégré au dispositif d'application de façon temporaire ou permanente. Par exemple, une extension-occlusale EO de la surface fermée SF peut être incorporée de façon à ce que celle-ci puisse s'insérer entre les dents au niveau de la surface de contact CO et ainsi séparer les dents.

Un système d'écartement SA des dents peut également être utilisé de façon totalement indépendante (figure 12), e.g. matrice, écarteur type Palodent®, coin de bois CB, etc.

### Agent d'indication et de régulation de la pression exercée sur la surface fermée SF.

Il peut être utile d'appliquer une force d'une grandeur précise sur la surface fermée SF contre la surface dentaire ST. Selon le type d'agent de scellement AS utilisé, il faut parfois appliquer une grandeur de force spécifique.

Sur les ailes latérales AL et/ou sur le système de fixation et/ou sur toute autre structure du présent système d'application, il est possible d'inclure un système (e.g. élastiques ou ressorts) permettant d'ajuster de façon active la force appliquée sur la surface fermée SF.

Il est également possible d'inclure, sur les ailes latérales AL et/ou sur le système de fixation ou sur toute autre structure de l'invention un dynamomètre, ou un système équivalent, pouvant indiquer à l'opérateur la grandeur de la force appliquée, lui permettant ainsi d'ajuster la force appliquée, le cas échéant.

### Indicateur d'humidité

Il peut être très utile de connaître le degré d'humidité dans la feuille-cavités FC à diverses étapes de l'application (e.g. avant l'application des différents agents de conditionnement. AC et des agents de scellement AS). Ainsi, un ou plusieurs indicateur(s) d'humidité (e.g. feuille absorbante avec agent réagissant à l'humidité, indicateur électronique, feuille absorbante seule, etc.) peut (peuvent) être intégré(s) au système d'application de façon temporaire ou permanente, pouvant même être intégré(s) à différents moments avant ou pendant la procédure d'application.

### Indicateur d'étanchéité

Pour déterminer si la surface fermée SF est suffisamment bien adaptée contre la surface ST de la dent DT, on peut intégrer divers systèmes à l'invention.

Par exemple, un indicateur de pression d'air peut être raccordé à la feuille-cavités FC, par un ou des orifices, passant à travers la surface fermée SF ou à travers sa périphérie. L'injection sous pression de gaz ou de fluide (e.g. de l'air ambiant) dans cette feuille-cavités FC par un ou plusieurs orifices permet à un indicateur de pression branché sur la feuille-cavités FC d'indiquer la pression en calculant le différentiel de pression entre l'entrée et la sortie. Une mauvaise adaptation engendre une fuite qui engendre une baisse de la pression relative. Une bonne adaptation engendre au contraire moins de fuite ce qui engendre une pression relative plus forte.

### Agent astringent

Afin de limiter les risques de contamination provenant parfois du saignement gingival il peut être utile d'utiliser un agent astringent.

Un agent astringent (e.g. Hemodent®, cut-roll®, etc.) peut être intégré le dispositif d'application de la présente invention dans une structure gingivale à la surface fermée SF. Par exemple, les portions touchant la gencive G du système de fixation et/ou les ailes latérales AL peuvent en être pré-imprégnées.

Une substance de rétention, de type absorbante, peut être utilisée pour une meilleure rétention de l'agent astringent.

### Abrasif

Pour facilité la finition, un abrasif peut être appliqué sur l'un des éléments du système.

### Agent bénéfique pour le parodonte

Une ou des composante(s) du scellant S peut (peuvent) contenir un agent bénéfique pour le parodonte. Le scellant S pourrait être appliqué seulement pour son effet parodontal (e.g. anti-microbien, facteur de croissance osseuse, agent anti-inflammatoire, etc.). Le scellant S pourrait dans ces cas être appliqué plus gingivalement.

### Autres notes

Une ou plusieurs application(s) peut (peuvent) être faite(s) avec le même système suivant l'invention selon les matériaux et la configuration choisis.

Il est possible de jumeler plusieurs surfaces fermées SF dans le même dispositif d'application pour faire plusieurs applications sur plusieurs surfaces dentaires ST différentes.

La présente invention peut servir, autre que pour l'application du scellant S, à l'application contrôlée sur les surfaces dentaires et durant une période prolongée (e.g. minutes ou heures) d'un agent protecteur ou d'un agent cosmétique (e.g. agent de blanchiment).

Une bande additionnelle passant dans la feuille-cavités FC peut être ajoutée. Cette bande (e.g. ayant la forme d'une bande sablée dentaire interproximale) est conçue pour la préparation de la surface dentaire ST (e.g. abrasif nettoyant, absorbant contenant un agent de conditionnement AC, etc.) et peut passer dans l'espace entre la surface interne de la surface fermée SF et la surface dentaire ST.

Compte tenu que le dispositif d'application de la présente invention présente des capacités d'adaptation remarquables sur les surfaces dentaires lisses, il pourrait être utilisé pour des techniques restauratives de surfaces dentaires lisses.

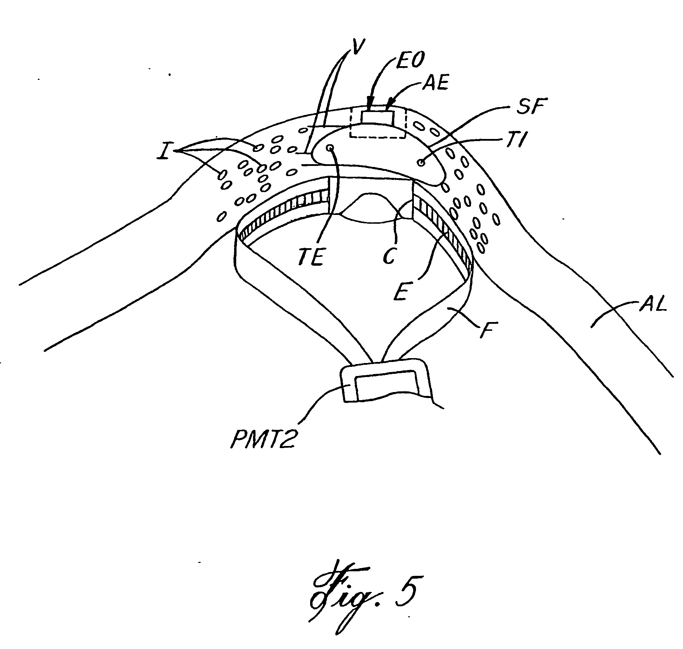

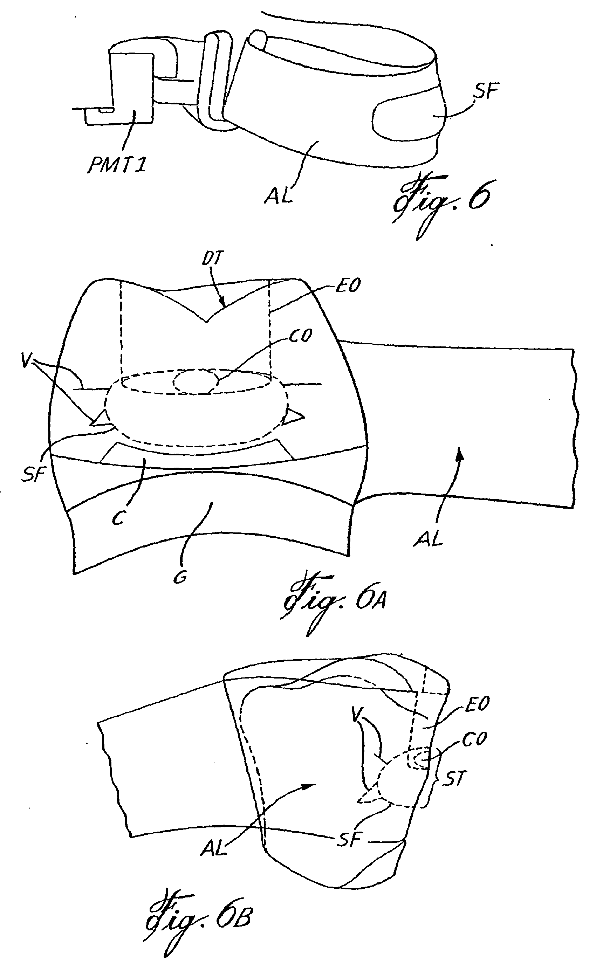

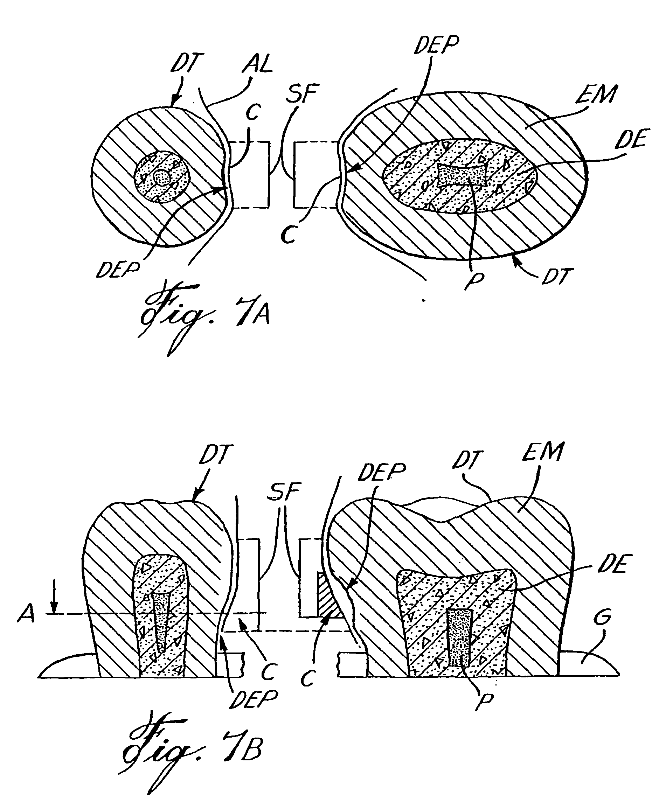

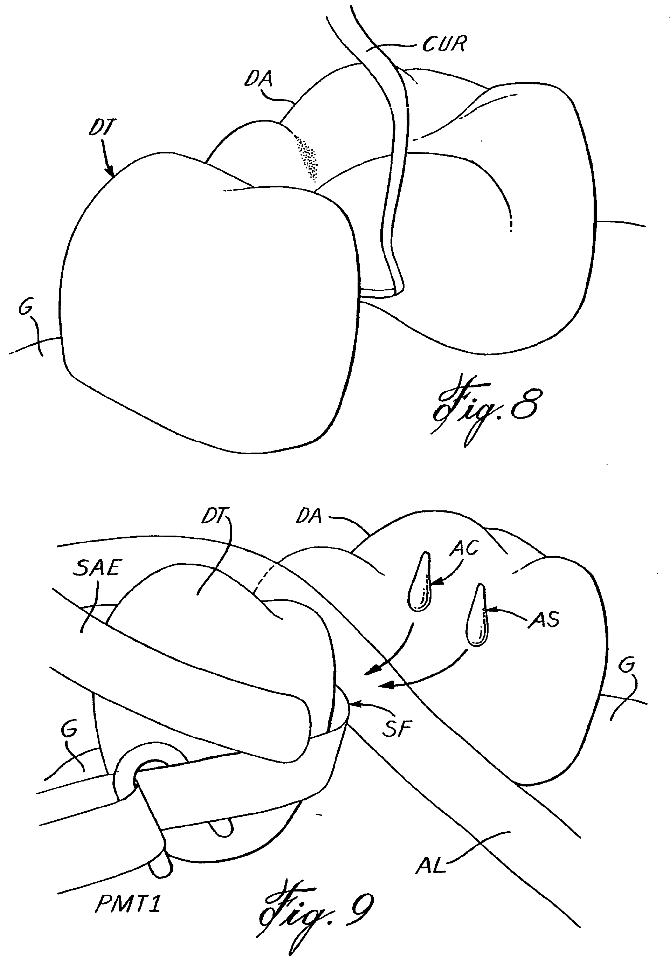

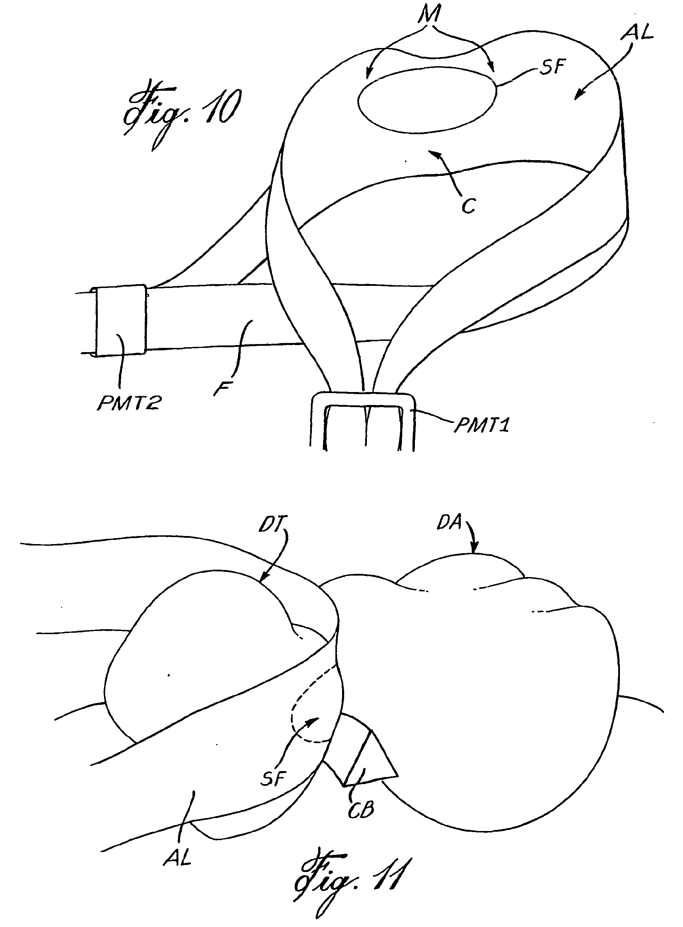

Il faut noter que l'utilisation des produits actuels, par exemple utilisés en restauration dentaire, ne permettrait pas d'effectuer une application d'un scellant à l'interproximal de morphologie biocompatible qui respecte l'anatomie de la dent. Par exemple, si une bande de reconstruction régulière BR était utilisée pour appliquer un agent de scellement AS (voir diverses figures 2), ou même si on tentait d'utiliser un pinceau, cela engendrerait un manque de polymérisation due à la contamination de la couche mince par l'oxygène ou l'humidité, des excès EX (figure 2D) et une forme qui ne respecte pas l'anatomie de la dent (voir figures 2C et 2D) pouvant ainsi causer des problèmes parodontaux et fonctionnels lors de la mastication.

D'autre part, l'application d'un scellant sur la surface dentaire interproximale est possible avec la présente invention dont les caractéristiques ont été décrites ci-dessus suivant la méthode d'application qui suit ci-après.

### Méthode d'application de scellant à l'interproximal

### Identification et évaluation de la surface à traiter

Il faut d'abord vérifier qu'il n'y a pas de contre-indications au traitement (e.g. présence d'une très large carie, morphologie atypique, contre-indications médicales, etc.).

### Nettoyage de la surface à traiter (figure 8)

Avec une curette CUR et/ou une bande sablée abrasive ou avec tout autre instrument approprié, l'opérateur nettoie la surface à traiter ST comme il le fait habituellement lors d'un nettoyage régulier.

### Mise en place du dispositif d'application (figure 9)

On met la surface fermée SF en place en utilisant, si nécessaire, les ailes latérales AL. L'insertion se fait en insérant une des ailes AL à travers la surface de contact CO, puis en glissant la surface fermée SF en position.

### Fixation de la surface fermée SF du dispositif d'application

On fixe le dispositif d'application allongé et donc la surface fermée SF par serrement, à l'aide du porte-matrice tofflemire® PMT2, autour de la dent DT.

### Écartement des dents

Dans le cas de l'utilisation de la réalisation préférée, un écartement suffisant est obtenu par l'agent d'écartement AE (qui peut prendre la forme de l'extension-occlusale EO de la surface fermée SF) lors de l'insertion de la portion supérieure à la surface fermée SF entre les dents vis-à-vis les surfaces de contact CO. Si l'écartement des dents n'est pas suffisant, le système d'écartement SA peut également être utilisé.

### Préparation de la surface dentaire DT

La surface dentaire à traiter ST est ensuite préparée, si nécessaire, avec une ou plusieurs des substances suivantes.

### Mordançage de la surface dentaire à traiter.

De l'acide phosphorique 37% (ou autre agent de mordançage) est appliqué durant quelques secondes dans le volume entre la surface interne de la surface fermée SF et la surface dentaire DT à traiter.

### Rinçage

Un rinçage de quelques secondes est par la suite effectué. Dans le cas de l'utilisation d'un apprêt auto-mordançant (ne nécessitant pas de rinçage), un rinçage n'est pas nécessaire.

### Séchage

Un séchage est réalisé, si nécessaire. Le séchage partiel ou total du volume de la feuille-cavités FC peut se faire avec un gaz (e.g. air ambiant de l'unité dentaire) comprimé. Un faisceau d'air comprimé avec la seringue eau-air SAE (figure 9) est alors dirigé entre la surface fermée SF et la surface ST de la dent DT. Les ailes latérales AL peuvent aider à orienter le jet d'air. Une section absorbante peut être utilisée pour effectuer le séchage en tout ou en partie. Dans le cas d'un scellant S hydrophile, on voudra un séchage partiel de la feuille-cavités FC.

### Application de l'apprêt si nécessaire.

Un apprêt est inséré dans le volume entre la surface interne de la surface fermée SF et la surface dentaire ST à traiter durant quelques secondes, puis séché à l'air quelques secondes.

### Mise en place de l'agent de scellement AS

Un agent de scellement AS (figure 9), e.g. Scotch Bond Multi Purpose Plus^{™} de 3M, est appliqué en laissant une goutte de l'agent de scellement passivement ou en l'injectant sous pression à l'interface surface fermée SF et la surface ST de la dent DT.

Puis, si nécessaire, en déplaçant légèrement en un mouvement de va-et-vient la surface fermée SF contre la surface ST de la dent DT à l'aide des ailes latérales AL, on remplit le plus possible le volume de la feuille-cavités FC.

### Application d'une force

Si nécessaire, durant la polymérisation, une force moyenne en direction de la surface ST de la dent DT peut être exercée sur la surface fermée SF grâce, entre autres, aux ailes latérales AL. On peut utiliser la serre-matrice PMT1 pour serrer les ailes latérales AL autour de la dent DT.

### Retrait du dispositif d'application

Une fois la polymérisation terminée, le dispositif d'application est retiré en ne laissant que le scellant S en place sur la surface dentaire ST.

### Enlèvement des excès et finition

Une vérification de la surface traitée ST à l'aide d'une sonde dentaire est réalisée (e.g. sonde parodontale, explorateur dentaire, etc.). Si des excès sont détectés, ils sont alors enlevés avec une curette et/ou une bande sablée. La surface ST peut ensuite être polie à l'aide d'une bande polissante (e.g. bande abrasive de moyenne à fine).

Ayant généralement décrit l'ensemble de la procédure, suivent ci-dessous quelques variantes et/ou caractéristiques possibles de la procédure.

### Plusieurs bandes pour la même application

Un ou plusieurs dispositifs d'application peut (peuvent) être utilisé(s) pour la même procédure d'application.

### Retrait et remise en place répétés du dispositif d'application durant la procédure

Par exemple, après le mordançage, le dispositif d'application peut être retiré pour s'assurer qu'il n'y a pas de résidus d'acide sur ce dernier.

### Application sur une surface lisse non-interproximale

Pour une surface non-interproximale (e.g. buccale ou linguale), la procédure reste la même à l'exception du fait qu'il est moins nécessaire de procéder à l'écartement des dents.

### Système d'abrasion à airpour le nettoyage de la surface.

Au lieu de nettoyer la surface préalablement à l'insertion du dispositif d'application, il est possible d'installer le dispositif d'application en place puis, d'utiliser un jet d'abrasion avec un système d'abrasion à air pour nettoyer la surface dentaire ST et faire un début de préparation. Ceci permet de ne nettoyer que la surface dentaire ST que l'on désire traiter en l'isolant grâce au dispositif d'application. Ceci peut également être effectué avec un instrument au laser (existant sur le marché actuellement) ou avec une fraise.

### Utilisation d'un manche et d'un tuyau

Dans le cas ou le système de fixation est un manche MAN relié à la surface fermée SF, la méthode d'application varie sensiblement. Cette variante de l'invention permet de sceller encore plus facilement les surfaces qui sont plus facile à atteindre. L'opérateur peut tenir le manche MAN de façon à ce que la surface fermée SF soit en contact avec la dent DT durant les différentes étapes de la procédure.

Pour acheminer les produits utilisés et l'agent de scellement AS, l'opérateur peut, en plus de tous les autres moyens et options décrites ci-dessus, tremper la surface fermée SF dans les différents produits utilisés.

La nature du manche MAN peut varier durant la procédure.

## Revendications

1. Un dispositif pour appliquer un scellant sur une surface interproximale d'une dent, comprenant une surface fermée, des moyens de positionnement pour positionner ladite surface fermée contre une surface interproximale à traiter d'une dent, un agent de scellement conçu pour être positionné généralement entre ladite surface fermée et la surface interproximale et pour adhérer à la surface interproximale, et des moyens de maintien pour maintenir ladite surface fermée en position contre la surface interproximale durant le durcissement de l'agent de scellement, l'agent de scellement lorsque durci constituant au moins une partie du scellant appliqué à la surface interproximale.

2. Un dispositif suivant la revendication 1, dans lequel ladite surface fermée est flexible et est conçue pour épouser en sa périphérie la surface interproximale de façon à ce que ledit agent de scellement, lorsque durci, se confond sensiblement sans interruption avec la surface générale de la dent, cette surface générale comprenant la surface interproximale.

3. Un dispositif suivant la revendication 2, dans lequel ladite surface fermée est conçue pour ménager, lorsqu'en position contre la surface interproximale, une cavité, ladite cavité étant conçue pour recevoir au moins ledit agent de scellement.

4. Un dispositif suivant la revendication 3, dans lequel ladite surface fermée, lorsque l'agent de scellement a durci contre la surface interproximale et à l'intérieur de ladite cavité, est conçue pour être enlevée de l'agent de scellement.

5. Un dispositif suivant la revendication 4, dans lequel un film-protecteur est inclut entre ladite surface fermée et ledit agent de scellement, ledit film-protecteur étant conçu pour recouvrir l'agent de scellement durci et constituant avec ledit agent de scellement durci au moins une partie du scellant.

6. Un dispositif suivant la revendication 3. dans lequel au moins une partie de ladite surface fermée, lorsque l'agent de scellement a durci contre la surface interproximale et à l'intérieur de ladite cavité, est conçue pour demeurer apposer sur l'agent de scellement et former avec l'agent de scellement durci au moins une partie du scellant.

7. Un dispositif suivant la revendication 6, dans lequel un film-protecteur est inclut entre ladite surface fermée et ledit agent de scellement, ledit film-protecteur étant conçu pour recouvrir l'agent de scellement durci, au moins une partie de ladite surface fermée, lorsque l'agent de scellement a durci contre la surface interproximale et à l'intérieur de ladite cavité, étant conçue pour demeurer apposer sur ledit film-protecteur de façon à former avec l'agent de scellement durci et ledit film-protecteur au moins une partie du scellant.

8. Un dispositif suivant la revendication 1, dans lequel lesdits moyens de positionnement comprennent des éléments latéraux se prolongeant de part et d'autre de ladite surface fermée et pouvant être glissés dans l'espace interproximal entre deux dents adjacentes.

9. Un dispositif suivant la revendication 8, dans lequel lesdits éléments latéraux font également partie desdits moyens de maintien utilisés pour maintenir ladite surface fermée en position contre la surface interproximale durant le durcissement de l'agent de scellement.

10. Un dispositif suivant la revendication 9, dans lequel lesdits moyens de maintien comprennent une serre-matrice agissant sur lesdits éléments latéraux afin de maintenir ladite surface fermée en position contre la surface interproximale.

11. Un dispositif suivant la revendication 1, dans lequel lesdits moyens de maintien comprennent un système de fixation pour maintenir de façon temporaire ou permanente la surface fermée SF contre la surface interproximale

12. Un dispositif suivant la revendication 11, dans lequel ledit système de fixation comprend, sur un bord gingival de ladite surface fermée, un élément allongé conçu pour entourer la dent traitée et isoler ladite surface fermée des fluides provenant de la partie gingivale

13. Un dispositif suivant la revendication 12, dans lequel ledit élément allongé est conçu pour être relié à une serre-matrice conçue pour serrer l'élément allongé autour de la dent traitée.

14. Un dispositif suivant la revendication 13, dans lequel ledit élément allongé comprend un organe d'étanchéité.

15. Un dispositif suivant la revendication 11, dans lequel ledit système de fixation comprend un élément ayant la forme d'un coin de bois conçu pour maintenir la surface fermée en position.

16. Un dispositif suivant la revendication 11, dans lequel ledit système de fixation comprend une extension se prolongeant du bord occlusal de ladite surface fermée et conçue pour être coincée dans le point ou la surface de contact de deux dents adjacentes.

17. Un dispositif suivant la revendication 16, dans lequel ladite extension est constituée d'un mince film.

18. Un dispositif suivant la revendication 16, dans lequel ladite extension est d'épaisseur telle de façon à servir d'organe d'écartement des dents adjacentes.

19. Un dispositif suivant la revendication 11, dans lequel ledit système de fixation comprend un manche conçu pour être relié à ladite surface fermée afin de positionner et maintenir ladite surface fermée contre la surface traitée.

20. Un dispositif suivant la revendication 19, dans lequel ledit manche inclut un embout suffisamment mince pour pouvoir être inséré dans l'espace interproximal entre les deux dents adjacentes.

21. Un dispositif suivant la revendication 19, dans lequel ledit manche comporte un tuyau interne pour l'acheminement de différents produits fluides nécessaires à la procédure d'application du scellant.

22. Un dispositif suivant la revendication 11, dans lequel ledit système de fixation comprend une substance à mémoire élastique ou capable de devenir suffisamment rigide afin, lorsqu'installée autour de ladite surface fermée, de servir aussi de surface fermée.

23. Un dispositif suivant la revendication 11, dans lequel ledit système de fixation comprend un système de bras conçu pour subir une déformation permanente avec, ou sans, un système actif d'application de force.

24. Un dispositif suivant la revendication 23, dans lequel ledit système de bras est chargé à l'aide d'un ressort.

25. Un dispositif suivant la revendication 11, dans lequel ledit système de fixation comprend une extension-occlusale reliée à ladite surface fermée afin de permettre le maintien manuel de ladite surface fermée en maintenant ladite extension-occlusale elle-même en position.

26. Un dispositif suivant la revendication 11, dans lequel ledit système de fixation comprend un ballon gingival conçu pour être attaché à ladite surface fermée et inséré dans l'espace interproximal, de façon à, une fois gonflé, maintenir en place par pression ladite surface fermée.

27. Un dispositif suivant la revendication 2, dans lequel ladite surface fermée est déformable de façon à être capable de sensiblement suivre la configuration de la surface interproximale.

28. Un dispositif suivant la revendication 27, dans lequel ladite surface fermée est faite d'un matériau plastique capable de déformation élastique ou plastique.

29. Un dispositif suivant la revendication 1, dans lequel ladite surface fermée comprend un agent de conditionnement.

30. Un dispositif suivant la revendication 1, dans lequel ladite surface fermée comporte des ouvertures conçues pour briser les tensions dans la surface fermée qui peuvent nuire à l'adaptation intime de ladite surface fermée sur la surface interproximale.

31. Un dispositif suivant la revendication 1, dans lequel un organe d'étanchéité est inclut pour recouvrir la surface externe de ladite surface fermée et dépasser de celle-ci en périphérie, assurant ainsi l'étanchéité de la surface fermée sur toute sa périphérie.

32. Un dispositif suivant la revendication 3, dans lequel au moins un orifice est ménagé à travers ladite surface fermée et constitue une entrée pour différents produits utilisés, e.g. eau, acide, air, agent de conditionnement, agent de scellement, agent abrasif, durant la procédure d'application.

33. Un dispositif suivant la revendication 32, dans lequel une seringue est utilisée pour injecter lesdits produits à travers l'orifice et dans ladite cavité.

34. Un dispositif suivant la revendication 32, dans lequel au moins un tuyau est conçu pour être raccordé audit orifice.

35. Un dispositif suivant la revendication 32, dans lequel au moins une capsule pré-remplie d'un produit à utiliser durant l'application est reliée audit orifice.

36. Un dispositif suivant la revendication 3, dans lequel au moins un orifice d'évacuation est ménagé à travers ladite surface fermée et constitue une sortie pour différents produits utilisés durant la procédure d'application, e.g. agent de conditionnement, eau, agent de scellement, afin de faciliter le déplacement de ces produits.

37. Un dispositif suivant la revendication 1, dans lequel des fibres optiques sont incluent afin d'acheminer les ondes électromagnétiques nécessaires pour la polymérisation de l'agent de scellement.

38. Un dispositif suivant la revendication 1, dans lequel, pour les dents comportant une ou des dépression(s) sur leurs surfaces interproximales, ladite surface fermée comprend une forme conçue pour épouser la configuration de la dépression.

39. Un dispositif suivant la revendication 38, dans lequel ladite forme est constituée d'un matériau flexible, spongieux et compressible.

40. Un dispositif suivant la revendication 1, dans lequel des guides visuels et/ou physiques sont incluent pour aider l'opérateur à positionner ladite surface fermée contre la surface interproximal à traiter.

41. Un dispositif suivant la revendication 40, dans lequel lesdits guides sont disposés en périphérie de ladite surface fermée.

42. Un dispositif suivant la revendication 40, dans lequel lesdits guides sont imprimés, embossés ou découpés au niveau de ladite surface fermée ou de façon adjacente à cette dernière.

43. Un dispositif suivant la revendication 1, dans lequel ladite surface fermée comprend un absorbant permettant de faciliter le déplacement ou la rétention des produits fluides utilisés.

44. Un dispositif suivant la revendication 43, dans lequel ledit absorbant augmente le contrôle du produit, le temps de contact du produit avec la surface interproximale et/ou facilite l'évacuation des fluides.

45. Un dispositif suivant la revendication 1, dans lequel un système d'ajustement de la force appliquée sur ladite surface fermée est inclut.

46. Un dispositif suivant la revendication 1, dans lequel un système de mesure de la force appliquée sur ladite surface fermée est inclut.

47. Un dispositif suivant la revendication 3, dans lequel un indicateur d'humidité est inclut pour indiquer le degré d'humidité dans ladite cavité.

48. Un dispositif suivant la revendication 3, dans lequel un indicateur d'étanchéité est inclut pour indiquer l'étanchéité de ladite surface fermée contre la surface interproximale.

49. Un dispositif suivant la revendication 48, dans lequel ledit indicateur d'étanchéité comprend un indicateur de pression d'air raccordé à ladite cavité.

50. Un dispositif suivant la revendication 1, dans lequel un agent astringent est inclut dans une structure gingivale à ladite surface fermée afin de limiter les risques de contamination.

51. Un dispositif suivant la revendication 1, dans lequel, afin de contrôler l'application de scellant dans une région non désirée, un agent inhibiteur est inclut qui inhibe la polymérisation de l'agent de scellement.

52. Un dispositif suivant la revendication 51, dans lequel ledit agent inhibiteur est appliqué sur les faces internes situées extérieurement de ladite surface fermée et en périphérie de ladite surface fermée.

53. Un dispositif suivant la revendication 51, dans lequel ledit agent inhibiteur comprend une texture ou des perforations incompatibles avec la polymérisation de l'agent de scellement.

54. Un dispositif suivant la revendication 1. dans lequel ladite surface fermée est faite de Mylar®.

55. Un dispositif suivant la revendication 54, dans lequel ladite surface fermée a une épaisseur entre 0.0005 et 0.003 pouce.

56. Un dispositif pour appliquer un scellant sur une surface interproximale d'une dent, comprenant une surface fermée, des moyens de positionnement pour positionner ladite surface fermée contre une surface interproximale à traiter d'une dent, ladite surface fermée étant conçue pour permettre à un agent de scellement d'être reçu généralement entre ladite surface fermée et la surface interproximale, et des moyens de maintien pour maintenir ladite surface fermée en position contre la surface interproximale durant le durcissement de l'agent de scellement, l'agent de scellement lorsque durci adhérant à la surface interproximale et constituant au moins une partie du scellant appliqué à la surface interproximale.

57. Un dispositif suivant la revendication 56, dans lequel ladite surface fermée est conçue pour épouser en sa périphérie la surface interproximale de façon à ce que l'agent de scellement, lorsque durci, se confond sensiblement sans interruption avec la surface générale de la dent, cette surface générale comprenant la surface interproximale.

58. Un dispositif suivant la revendication 57, dans lequel ladite surface fermée est conçue pour ménager, lorsqu'en position contre la surface interproximale, une cavité, ladite cavité étant conçue pour recevoir au moins l'agent de scellement.

## Claims

1. A device for applying a sealant to an interproximal surface of a tooth, comprising a closed surface, positioning means for positioning the said closed surface against an interproximal surface to be treated of a tooth, a sealing agent which is designed to be positioned generally between the said closed surface and interproximal surface, and to adhere to the interproximal surface, and retention means to retain the said closed surface in position against the interproximal surface during hardening of the sealing agent, the sealing agent when hardened constituting at least part of the sealant applied to the interproximal surface.

2. A device according to claim 1, wherein the said closed surface is flexible and is designed such that its periphery corresponds in shape to the interproximal surface, such that when the said sealing agent has hardened, it blends substantially without interruption with the general surface of the tooth, this general surface comprising the interproximal surface.

3. A device according to claim 2, wherein the said closed surface is designed such that, when it is in position against the interproximal surface, it provides a cavity, the said cavity being designed to receive at least the said sealing agent.

4. A device according to claim 3, wherein, when the sealing agent has hardened against the interproximal surface and inside the said cavity, the said closed surface is designed to be removed from the sealing agent.

5. A device according to claim 4, wherein a protective film is included between the said closed surface and the said sealing agent, the said protective film being designed to cover the hardened sealing agent, and constituting together with the said hardened sealing agent at least part of the sealant.

6. A device according to claim 3, wherein, when the sealing agent has hardened against the interproximal surface and inside the said cavity, at least part of the said closed surface is designed to remain attached to the sealing agent, and to form together with the hardened sealing agent at least part of the sealant.

7. A device according to claim 6, wherein a protective film is included between the said closed surface and the said sealing agent, the said protective film being designed to cover the hardened sealing agent, at least part of the said closed surface, when the sealing agent has hardened against the interproximal surface and inside the said cavity, being designed to remain attached to the said protective film, such as to form together with the hardened sealing agent and the said protective film at least part of the sealant.

8. A device according to claim 1, wherein the said positioning means comprise lateral elements which extend on both sides of the said closed surface, and can be slid into the interproximal space between two adjacent teeth.

9. A device according to claim 8, wherein the said lateral elements also form part of the said retention means which are used to retain the said closed surface in position against the interproximal surface during the hardening of the sealing agent.

10. A device according to claim 9, wherein the said retention means comprise a die clamp which acts on the said lateral element in order to retain the said closed surface in position against the interproximal surface.

11. A device according to claim 1, wherein the said retention means comprise a securing system to retain the closed surface SF temporarily or permanently against the interproximal surface.

12. A device according to claim 11, wherein the said securing system comprises, on a gingival edge of the said closed surface, an elongate element which is designed to surround the treated tooth and to isolate the said closed surface from the fluids obtained from the gingival part.

13. A device according to claim 12, wherein the said elongate element is designed to be connected to a die clamp which is designed to clamp the elongate element around the treated tooth.

14. A device according to claim 13, wherein the said elongate element comprises a sealing unit.

15. A device according to claim 11, wherein the said securing system comprises an element in the form of a wooden wedge which is designed to retain the closed surface in position.

16. A device according to claim 11, wherein the said securing system comprises an extension which extends from the occlusal edge of the said closed surface, and is designed to be wedged at the point or the surface of contact of two adjacent teeth.

17. A device according to claim 16, wherein the said extension consists of a thin film.

18. A device according to claim 16, wherein the said extension is of a thickness such as to act as a unit for spacing of the adjacent teeth.

19. A device according to claim 11, wherein the said securing system comprises a sleeve which is designed to be connected to the said closed surface, in order to position and retain the said closed surface against the treated surface.

20. A device according to claim 19, wherein the said sleeve includes a joining piece which is thin enough to be inserted in the interproximal space between the two adjacent teeth.

21. A device according to claim 19, wherein the said sleeve comprises an internal tube to convey different fluid products which are necessary for the procedure of application of the sealant.

22. A device according to claim 11, wherein the said securing system comprises a substance which has a resilient memory, or can become sufficiently rigid such that, when it is installed around the said closed surface, it can also act as a closed surface.

23. A device according to claim 11, wherein the said securing system comprises an arm system which is designed to sustain permanent deformation, with or without an active system for application of force

24. A device according to claim 23, wherein the said arm system is loaded by means of a spring.

25. A device according to claim 11, wherein the said securing system comprises an occlusal extension which is connected to the said closed surface in order to permit manual retention of the said closed surface by retaining the said occlusal extension itself in position.

26. A device according to claim 11, wherein the said securing system comprises a gingival balloon which is designed to be attached to Lhe said closed surface and inserted in the interproximal space, such that, once it is inflated, it retains the said closed surface in place by pressure.

27. A device according to claim 2, wherein the said closed surface is deformable such that it can substantially follow the configuration of the interproximal surface.

28. A device according to claim 27, wherein the said closed surface is made of a plastic material which is capable of elastic or plastic deformation.

29. A device according to claim 1, wherein the said closed surface comprises a conditioning agent.

30. A device according to claim 1, wherein the said closed surface comprises apertures which are designed to break the tensions in the closed surface which can detract from close fitting of the said closed surface on the interproximal surface.

31. A device according to claim 1, wherein a sealing unit is included to cover the outer surface of the said closed surface and to extend beyond the periphery of the latter, thus assuring the sealing of the closed surface around its entire periphery.

32. A device according to claim 3, wherein at least one opening is provided through the said closed surface, and constitutes an intake for different products used, e.g. water, acid, air, conditioning agent, sealing agent, abrasive agent, during the application procedure.

33. A device according to claim 32, wherein a syringe is used to inject the said products through the opening and into the said cavity.

34. A device according to claim 32, wherein at least one tube is designed to be connected to the said opening.

35. A device according to claim 32, wherein at least one capsule pre-filled with a product to be used during the application is connected to the said opening.

36. A device according to claim 3, wherein at least one discharge opening is provided through the said closed surface, and constitutes an outlet for different products used during the application procedure, e.g. conditioning agent, water, sealing agent, in order to facilitate the displacement of these products.

37. A device according to claim 1, wherein optical fibres are included in order to convey the electromagnetic waves which are necessary for the polymerisation of the sealing agent.

38. A device according to claim 1, wherein, for teeth which comprise one or more depression(s) on their interproximal surfaces, the said closed surface comprises a mould which is designed to correspond in shape to the configuration of the depression.

39. A device according to claim 38, wherein the said mould consists of a flexible, spongy and compressible material.

40. A device according to claim 1, wherein visual and/or physical guides are included in order to help the operator to position the said closed surface against the interproximal surface to be treated.

41. A device according to claim 40, wherein the said guides are disposed on the periphery of the said closed surface.

42. A device according to claim 40, wherein the said guides are impressed, embossed or cut at the said closed surface or adjacent to the latter.

43. A device according to claim 1, wherein the said closed surface comprises an absorbent which makes it possible to facilitate the displacement or retention of the fluid products used.

44. A device according to claim 43, wherein the said absorbent increases the control of the product and the time of contact of the product with the interproximal surface, and/or facilitates discharge of the fluids.

45. A device according to claim 1, wherein a system for adjustment of the force applied to the said closed surface is included.

46. A device according to claim 1, wherein a system for measurement of the force applied to the said closed surface is included.

47. A device according to claim 3, wherein a humidity indicator is included in order to indicate the degree of humidity in the said cavity.

48. A device according to claim 3, wherein a sealing indicator is included in order to indicate the sealing of the said closed surface against the interproximal surface.

49. A device according to claim 48, wherein the said sealing indicator comprises an air pressure indicator which is connected to the said cavity.

50. A device according to claim 1, wherein an astringent agent is included in a gingival structure at the said closed surface in order to limit the risks of contamination.

51. A device according to claim 1, wherein, in order to control the application of sealant in an undesirable area, an inhibiting agent is included which inhibits the polymerisation of the sealing agent.

52. A device according to claim 51, wherein the said inhibiting agent is applied to the internal, surfaces which are situated on the exterior of the said closed surface and on the periphery of the said closed surface.

53. A device according to claim 51, wherein the said inhibiting agent comprises a texture or perforations which are incompatible with the polymerisation of the scaling agent.

54. A device according to claim 1, wherein the said closed surface is made of Mylar®.

55. A device according to claim 54, wherein the said closed surface has a thickness of between 0.0005 and 0.003 inch.

56. A device for applying a sealant to an interproximal surface of a tooth, comprising a closed surface, positioning means for positioning the said closed surface against an interproximal surface to be treated of a tooth, the said closed surface being designed to allow a sealing agent to be received generally between the said closed surface and interproximal surface, and retention means to retain the said closed surface in position against the interproximal surface during hardening of the sealing agent, the sealing agent when hardened adhering to the interproximal surface, and constituting at least part of the sealant applied to the interproximal surface.

57. A device according to claim 56, wherein the periphery of the said closed surface is designed to correspond in shape to the interproximal surface, such that when the sealing agent has hardened, it blends substantially without interruption with the general surface of the tooth, this general surface comprising the interproximal surface.

58. A device according to claim 57, wherein the said closed surface is designed such that, when it is in position against the interproximal surface, it provides a cavity, the said cavity being designed to receive at least the said sealing agent.

## Patentansprüche

1. Vorrichtung zum Anbringen einer Füllung auf einer interproximalen Oberfläche eines Zahnes mit einer geschlossenen Fläche, Positioniermitteln zum Positionieren der geschlossenen Fläche gegen eine zu behandelnde interproximale Oberfläche eines Zahnes, einem Füllungsmittel, dafür vorgesehen, im allgemeinen zwischen der geschlossenen Fläche und der interproximalen Oberfläche positioniert zu werden und an der interproximalen Oberfläche zu haften, und Haltemitteln, um die geschlossene Fläche während der Aushärtung des Füllungsmittels gegen die interproximale Oberfläche in Position zu halten, wobei das Füllungsmittel, sobald es ausgehärtet ist, zumindest einen Teil der auf der interproximale Oberflächen angebrachten Füllung bildet.

2. Vorrichtung nach Anspruch 1, wobei die geschlossene Fläche nachgiebig ist und dafür vorgesehen ist, sich an ihrem Umfang an die interproximale Fläche anzulegen, so dass das Füllungsmittel, sobald es ausgehärtet ist, im wesentlichen ohne Unterbrechung mit der allgemeinen Oberfläche des Zahnes verschmilzt, wobei diese allgemeine Fläche die interproximale Fläche aufweist.

3. Vorrichtung nach Anspruch 2, wobei die geschlossene Fläche dafür vorgesehen ist, wenn sie gegen die interproximale Oberfläche positioniert ist, einen Hohlraum zu bilden, wobei der Hohlraum dafür vorgesehen ist, zumindest das Püllungsmittel aufzunehmen.

4. Vorrichtung nach Anspruch 3, wobei die geschlossene Fläche, sobald das Füllungsmittel gegen die interproximale Oberfläche und im Innern des Hohlraums ausgehärtet ist, dafür vorgesehen ist, von dem Füllungsmittel abgenommen zu werden,

5. Vorrichtung nach Anspruch 4, wobei eine Schutzfolie zwischen der geschlossenen Fläche und dem Füllungsmittel vorgesehen ist, wobei die Schutzfolie dafür vorgesehen ist, das ausgehärtete Füllungsmittel abzudecken, und mit dem ausgehärteten Füllungsmittel zumindest einen Teil der Füllung bildet.

6. Vorrichtung nach Anspruch 3, wobei zumindest ein Teil der geschlossenen Fläche dafür vorgesehen ist, sobald das Füllungsmittel gegen die interproximale Oberfläche und im Innern des Hohlraums ausgehärtet ist, weiterhin auf dem Füllungsmittel aufzuliegen und mit dem Füllungsmittel zumindest einen Teil der Füllung zu bilden.

7. Vorrichtung nach Anspruch 6, wobei eine Schutzfolie zwischen der geschlossenen Fläche und dem Füllungsmittel vorgesehen ist, wobei die Schutzfolie dafür vorgesehen ist, das ausgehärtete Füllungsmittel abzudecken, wobei zumindest ein Teil der geschlossenen Fläche dafür vorgesehen ist, sobald das Füllungsmittel gegen die interproximale oberfläche und im Innern des Hohlraums ausgehärtet ist, weiterhin auf der Schutzfolie auszuliegen, so dass er mit dem ausgehärteten Füllungsmittel und mit der Schutzfolie zumindest einen Teil der Füllung bildet.

8. Vorrichtung nach Anspruch 1, wobei die positioniermittel seitliche Elemente aufweisen, die sich beiderseits der geschlossenen Fläche erstrecken und in dem interproximalen Raum zwischen zwei benachbarten Zähnen gleiten können.

9. Vorrichtung nach Anspruch 8, wobei die seitlichen Elemente auch Teil der Haltemittel sind, die während der Aushärtung des Füllungsmittels verwendet werden, um die geschlossene Fläche gegen die interproximale Oberfläche in Position zu halten.

10. Vorrichtung nach Anspruch 9, wobei die Haltemittel eine Matrizenspannvorrichtung aufweisen, die auf die seitlichen Elemente einwirkt, um die geschlossene Fläche gegen die interproximale Oberfläche in Position zu halten.

11. Vorrichtung nach Anspruch 1, wobei die Haltemittel ein Befestigungssystem aufweisen, um die geschlossene Fläche SF vorübergehend oder dauerhaft gegen die interproximale Oberfläche zu halten.

12. Vorrichtung nach Anspruch 11, wobei das Befestigungssystem an dem gingivalen Rand der geschlossenen Fläche ein langgezogenes Element aufweist, das für vorgesehen ist, den behandelten Zahn zu umgeben und die geschlossene Fläche von Flüssigkeiten zu trennen, die aus dem gingivalen Bereich stammen.

13. Vorrichtung nach Anspruch 12, wobei das langgezogene Element dafür vorgesehen ist, mit einer Matrizenspannvorrichtung verbunden zu werden, die dafür vorgesehen ist, das langgezogene Element um den behandelten Zahn zu spannen.

14. Vorrichtung nach Anspruch 13, wobei das langgezogene Element ein Abdichtungsorgan aufweist.

15. Vorrichtung nach Anspruch 11, wobei das Befestigungssystem ein holzkeilförmiges Element aufweist, das dafür vorgesehen ist, die geschlossene Fläche in Position zu halten.

16. Vorrichtung nach Anspruch 11, wobei das Befestigungssystem eine Extension aufweist, die sich vom okklusalen Rand der geschlossenen Fläche erstreckt und dafür vorgesehen ist, an der Kontaktstelle oder Kontaktfläche von zwei benachbarten Zähnen eingeklemmt zu werden.

17. Vorrichtung nach Anspruch 16, wobei die Extension von einer dünnen Folie gebildet ist.

18. Vorrichtung nach Anspruch 16, wobei die Extension eine derartige Dicke hat, dass sie als Abstandsorgan der benachbarten Zähne dient.

19. Vorrichtung nach Anspruch 11, wobei das Befestigungssyatem eine Manschette aufweist, die dafür vorgesehen ist, mit der geschlossenen Fläche verbunden zu werden, um die geschlossene Fläche gegen die behandelte Oberfläche zu positionieren und festzuhalten.

20. Vorrichtung nach Anspruch 19, wobei die Manschette einen Stutzen aufweist, der ausreichend dünn ist, um in den interproximalen Raum zwischen den beiden benachbarten Zähnen eingeführt werden zu können.

21. Vorrichtung nach Anspruch 19, wobei die Manschette einen inneren Schlauch für die Durchleitung verschiedener flüssiger Produkte aufweist, die für das Verfahren zum Anbringen der Füllung erforderlich sind.

22. Vorrichtung nach Anspruch 11, wobei das Befestigungssystem eine Substanz mit elastischem Speicher oder eine Substanz aufweist, die ausreichend fest werden kann, damit sie, sobald sie um die geschlossene Fläche angebracht wurde, auch als geschlossene Fläche dient.

23. Vorrichtung nach Anspruch 11, wobei das Befestigungssystem ein Armsystem aufweist, das dafür vorgesehen ist, mit einem oder ohne ein Kraftaufbringungssystem einer dauerhaften Verformung ausgesetzt zu werden.

24. Vorrichtung nach Anspruch 23, wobei das Armsystem mit Hilfe einer Feder geladen wird.

25. Vorrichtung nach Anspruch 11, wobei das Befestigungssystem eine Okklusal-Extension aufweist, die mit der geschlossenen Fläche verbunden ist, um den manuellen Halt der geschlossenen Fläche zu ermöglichen, indem die Okklusal-Extension selbst in Position gehalten wird.

26. Vorrichtung nach Anspruch 11, wobei das Befestigungssystem einen gingivalen Ballon aufweist, der dafür vorgesehen ist, an der geschlossenen Fläche befestigt und in den interproximalen Raum eingeführt zu werden, derart, dass er, sobald er aufgeblasen ist, die geschlossene Fläche durch Druck in Position hält.

27. Vorrichtung nach Anspruch 2, wobei die geschlossene Fläche verformbar ist, so dass sie im Wesentlichen der Ausgestaltung der interproximalen Oberfläche folgen kann.

28. Vorrichtung nach Anspruch 27, wobei die geschlossene Fläche aus einem Kunststoff besteht, der elastisch oder plastisch verformbar ist.

29. Vorrichtung nach Anspruch 1, wobei die geschlossene Fläche ein Konditioniermittel aufweist.

30. Vorrichtung nach Anspruch 1, wobei die geschlossene Fläche Öffnungen aufweist, die dafür vorgesehen sind, die Spannungen in der geschlossenen Fläche zu brechen, die der engen Anpassung der geschlossenen Fläche an die interproximale Oberfläche abträglich sein können.

31. Vorrichtung nach Anspruch 1, wobei ein Abdichtungsorgan vorgesehen, um die äußere Fläche der geschlossenen Fläche abzudecken und diese am Umfang zu überragen, wodurch die Abdichtung der geschlossenen Fläche über deren gesamten Umfang bewirkt wird.

32. Vorrichtung nach Anspruch 3, wobei zumindest eine öffnung über die geschlossene Fläche vorgesehen ist und einen Einlass bildet für verschiedene Produkte, wie z. B. Wasser, Säure, Luft, Konditioniermittel, Füllungsmittel, Schleifmittel, die während des Anbringverfahren verwendet werden.

33. Vorrichtung nach Anspruch 32, wobei eine Spritze verwendet wird, um die Produkte über die öffnung in den Hohlraum einzuspritzen.

34. vorrichtung nach Anspruch 32, wobei zumindest ein Schlauch dafür vorgesehen ist, an die Öffnung angeschlossen zu werden.

35. Vorrichtung nach Anspruch 32, wobei mit der öffnung zumindest eine Kapsel verbunden ist, die mit einem Produkt befüllt ist, das während der Anbringung zu verwenden ist.

36. Vorrichtung nach Anspruch 3, wobei zumindest eine Ablauföffnung über die geschlossene Fläche vorgesehen ist und einen Auslass bildet für die verschiedenen Produkte, die während des Anbringvorgangs verwendet werden, wie z. B. Konditioniermittel, Wasser. Füllungsmittel, um die Bewegung dieser Produkte zu vereinfachen.

37. Vorrichtung nach Anspruch 1, wobei Lichtleitfasern vorgesehen sind, um die für die Polymerisation des Füllungsmittels erforderlichen elektromagnetischen Wellen durchzuleiten.

38. Vorrichtung nach Anspruch 1, wobei bei denjenigen Zähnen, die an ihren interproximalen Oberflächen eine oder mehrere Mulden aufweisen, die geschlossene Fläche eine Form aufweist, die dafür vorgesehen ist, sich an die Ausgestaltung der Mulde anzulegen.

39. Vorrichtung nach Anspruch 38, wobei die Form von einem biegsamen, schwammigen und komprimierbaren Material gebildet ist.

40. Vorrichtung nach Anspruch 1, wobei visuelle und/oder physische Führungsmittel vorgesehen sind, um den Benutzer bei der Positionierung der geschlossenen Fläche gegen die zu behandelnde interproximale Oberfläche zu unterstützen.

41. Vorrichtung nach Anspruch 40, wobei die Führungsmittel am Umfang der geschlossenen Fläche angeordnet sind.

42. Vorrichtung nach Anspruch 40, wobei die Führungsmittel im Bereich der geschlossenen Fläche oder an diese letzte angrenzend aufgedruckt, eingeprägt oder ausgestanzt sind.

43. Vorrichtung nach Anspruch 1, wobei die geschlossene Fläche ein Absorptionsmittel aufweist, um die Vereinfachung der Bewegung oder den Rückhalt der verwendeten flüssigen Produkte zu ermöglichen.

44. Vorrichtung nach Anspruch 43, wobei das Absorptionsmittel die Kontrolle des Produkts, die Kontaktzeit des Produkts mit der interproximalen Oberfläche erhöht und/oder das Ablaufen der Flüssigkeiten vereinfacht.

45. Vorrichtung nach Anspruch 1, wobei ein System zur Einstellung der auf die geschlossene Fläche aufgebrachten Kraft vorgesehen ist.

46. Vorrichtung nach Anspruch 1, wobei ein System zur Messung der auf die geschlossene Fläche aufgebrachten Kraft vorgesehen ist.

47. Vorrichtung nach Anspruch 3, wobei ein Feuchtigkeitsanzeiger vorgesehen ist, um den Feuchtigkeitsgrad in dem Hohlraum anzuzeigen.

48. Vorrichtung nach Anspruch 3, wobei ein Abdichtungsanzeiger vorgesehen ist, um die Abdichtung der geschlossenen Fläche gegen die interproximale Oberfläche anzuzeigen.

49. Vorrichtung nach Anspruch 48, wobei der Abdichtungsanzeiger einen Luftdruckanzeiger aufweist, der an den Hohlraum angeschlossen ist.

50. Vorrichtung nach Anspruch 1, wobei ein Adstringensmittel in einer zu der geschlossenen Fläche gingivalen Struktur vorgesehen ist, um die Kontaminationsgefahren zu mindern.

51. Vorrichtung nach Anspruch 1, wobei zur Kontrolle des Anbringens der Füllung in einem nicht erwünschten Bereich ein Hemmmittel vorgesehen ist, das die Polymerisation des Füllungsmittels hemmt.

52. Vorrichtung nach Anspruch 51, wobei das Hemmmittel an den inneren Flächen aufgetragen ist, die sich außerhalb der geschlossenen Fläche und am Umfang der geschlossenen Fläche befinden.

53. Vorrichtung nach Anspruch 51, wobei das Hemmmittel eine Textur oder Lochungen abweist, die mit der Polymerisation des Füllungsmittels nicht kompatibel sind.

54. Vorrichtung nach Anspruch 1, wobei die geschlossene Fläche aus Mylar® besteht.

55. Vorrichtung nach Anspruch 54, wobei die geschlossene Fläche eine Dicke zwischen 0,0005 und 0,003 Zoll hat.

56. Vorrichtung zum Anbringen einer Füllung auf einer interproximalen Oberfläche eines Zahnes mit einer geschlossenen Fläche, Positioniermitteln zum Positionieren der geschlossenen Fläche gegen eine zu behandelnde interproximale Oberfläche eines Zahnes, wobei die geschlossene Fläche dafür vorgesehen ist, zu ermöglichen, dass ein Füllungsmittel im allgemeinen zwischen der geschlossenen Fläche und der interproximalen Oberfläche aufgenommen wird, und Haltemitteln, um die geschlossene Fläche während der Aushärtung des Füllungsmittels gegen die interproximale Oberfläche in Position zu halten, wobei das Füllungsmittel, sobald es ausgehärtet ist, an der interproximalen Oberfläche haftet und zumindest einen Teil der auf der interproximalen Oberfläche angebrachten Füllung bildet.

57. Vorrichtung nach Anspruch 56, wobei die geschlossene Fläche dafür vorgesehen ist, sich an ihrem Umfang an die interproximale Fläche anzulegen, so dass das Füllungsmittel, sobald es ausgehärtet ist, im wesentlichen ohne Unterbrechung mit der allgemeinen Oberfläche des Zahnes verschmilzt, wobei diese allgemeine Fläche die interproximale Fläche aufweist.

58. Vorrichtung nach Anspruch 57, wobei die geschlossene Fläche dafür vorgesehen ist, sobald sie gegen die interproximale Oberfläche positioniert wurde, einen Hohlraum zu bilden, wobei der Hohlraum dafür vorgesehen ist, zumindest das Füllungsmittel aufzunehmen.
